# EUROPEAN PATENT SPECIFICATION

(11) **EP 3 070 858 B1**
(45) Date of publication and mention of the grant of the patent: **04.11.2020**
(21) Application number: 13899197.1
(22) Date of filing: 12.12.2013
(51) Int. Cl.: H04W 74/00, H04L 1/16, H04W 72/04, H04L 1/00

(54) **DATA TRANSMISSION METHOD AND DEVICE**
DATENÜBERTRAGUNGSVERFAHREN UND -VORRICHTUNG
PROCÉDÉ ET DISPOSITIF D'ÉMISSION DE DONNÉES

(43) Date of publication of application: 21.09.2016
(73) Proprietor: Huawei Device Co., Ltd., Dongguan, Guangdong 523808 (CN)
(72) Inventor: SHU, Guiming, Shenzhen Guangdong 518129 (CN); RONG, Zhigang, Shenzhen Guangdong 518129 (CN); LU, Su, Shenzhen Guangdong 518129 (CN); DING, Zhiming, Shenzhen Guangdong 518129 (CN); DU, Zhenguo, Shenzhen Guangdong 518129 (CN)
(74) Representative: Epping - Hermann - Fischer
(86) International application number: PCT/CN2013/089274
(87) International publication number: WO 2015/085552

(56) References cited:
- EP-A2- 2 330 778
- WO-A1-2012/040495
- CN-A- 102 547 917
- CN-A- 102 598 539
- CN-A- 102 792 757
- CN-A- 103 379 595
- US-A1- 2010 074 190
- US-A1- 2011 194 542
- US-A1- 2013 229 996

## Description

### TECHNICAL FIELD

Embodiments of the present invention relate to the field of communications technologies, and in particular, to a data transmission method and apparatus.

### BACKGROUND

In a wireless local area network (Wireless local access network, WLAN for short) that complies with the orthogonal frequency division multiplexing (Orthogonal frequency division multiplexing, OFDM for short) standard, a mechanism that is stipulated in a current standard and by using which a station (STA) sends data to an access point (Access Point, AP for short) is: multiple STAs share one channel, and the multiple STAs occupy the entire channel within a period of time by means of a contention mechanism to send data to an AP. Apparently, in the foregoing mechanism, channel resource usage is very low.

US 2011/0194542 A1 describes a method and apparatus for requesting channel access in a WLAN, particularly, for operating an unlicensed device on TV Whitespace.

US 2013/0229996 A1 discloses a method and apparatus providing multi-user parallel channel access (MU-PCA) and/or single-user parallel channel access (SU-PCA) using transmit and/or receive with symmetrical bandwidth, in the downlink (DL), uplink (UL), or combined DL and UL.

To improve channel resource usage, an existing optimized solution for a mechanism of data transmission between a STA and an AP based on a request to send (Request To Send, RTS for short) frame/a clear to send (Clear to send, CTS for short) frame is as follows: An AP divides in advance a channel into four subchannels, where each subchannel includes four subcarriers; after simultaneously detecting that a channel idle time exceeds a time of one data interframe space (Data interframe space, DIFS for short), multiple different STAs that need to send data separately and randomly select one subchannel, randomly select one subcarrier from each subchannel selected by the STAs, and concurrently send RTS to the AP, where the RTS does not include Media Access (MAC) layer data, and the STAs use the RTS to indicate to the AP that there is uplink data to be sent; and if the AP allows a STA to send data, the AP sends CTS on a corresponding subcarrier on which the STA has sent RTS, so as to indicate to the STA that a subchannel on which the subcarrier is located is used by the STA. In this way, multiple stations can concurrently send, on different subchannels, data to an AP after obtaining, by means of an RTS/CTS mechanism, permission to use the different subchannels.

However, such an existing optimized mechanism has the following problem: Synchronization of times at which multiple STAs concurrently send RTS is ensured by a case in which the multiple STAs simultaneously detect that a channel is idle; however, because surrounding wireless channel environments of different STAs are significantly different, it is very difficult to meet, by means of such synchronization of times, a synchronization requirement that multiple STAs use different subcarriers to concurrently send data.

### SUMMARY

Embodiments of the present invention, which are defined in the appended claims, provide a data transmission method and apparatus, which can well meet a synchronization requirement that multiple stations use different subcarriers to concurrently send data. In the following, embodiments not falling within the scope of the claims are to be understood as examples useful for understanding the invention.

According to the data transmission method and apparatus provided in the embodiments of the present invention, an access point sends channel opportunity information, so that stations that have data to be sent randomly select, after receiving the channel opportunity information, a channel opportunity from the channel opportunity information, and concurrently send a sending request message to the access point; then the access point allocates, according to the received sending request message, to a station that sends the received sending request message, a channel resource that is used for sending uplink data; and finally, the access point sends, according to the allocated channel resource, a sending acknowledgement message to the station that sends the received sending request message, so that stations that receive the sending acknowledgement message use channel resources to concurrently send uplink data. Therefore, a synchronization requirement that multiple stations use different subcarriers to concurrently send data can be well met.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a data transmission method according to the present invention;
FIG. 2 is a flowchart of Embodiment 2 of a data transmission method according to the present invention;
FIG. 3 is a signaling interaction diagram of Embodiment 3 of a data transmission method according to the present invention;
FIG. 4 is a schematic format diagram of an RTS frame in Embodiment 3 of a data transmission method according to the present invention;
FIG. 5 is a schematic format diagram of a CTS frame in Embodiment 3 of a data transmission method according to the present invention;
FIG. 6 is a signaling interaction diagram of Embodiment 4 of a data transmission method according to the present invention;
FIG. 7 is a schematic format diagram of an RTS frame in Embodiment 4 of a data transmission method according to the present invention;
FIG. 8 is a schematic format diagram of a CTS frame in Embodiment 4 of a data transmission method according to the present invention;
FIG. 9 is a schematic structural diagram of Embodiment 1 of an access point according to the present invention;
FIG. 10 is a schematic structural diagram of Embodiment 1 of a station according to the present invention;
FIG. 11 is a schematic structural diagram of Embodiment 2 of an access point according to the present invention; and
FIG. 12 is a schematic structural diagram of Embodiment 2 of a station according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

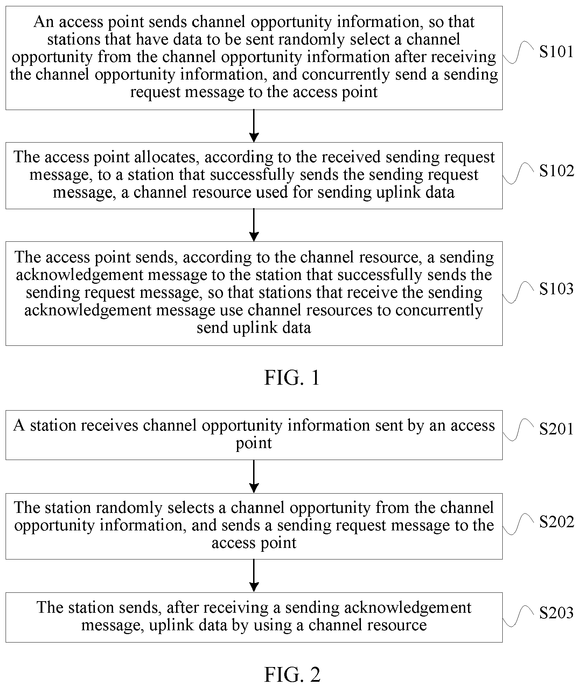

FIG. 1 is a flowchart of Embodiment 1 of a data transmission method according to the present invention. This embodiment is described by using an example in which an access point is used as an execution body. As shown in FIG. 1, the method of this embodiment may include:
S101. An access point sends channel opportunity information, where the channel opportunity information includes at least one channel opportunity, and the channel opportunity is a subchannel that can be used by a station to send a sending request message to the access point, and a corresponding subchannel usage time.

There are two implementable manners for sending channel opportunity information by an access point.

Manner 1. The access point sends a beacon frame, where the beacon frame includes the channel opportunity information. The access point may send the beacon frame to all stations in broadcast mode or to some stations in multicast mode.

Manner 2. The access point sends an uplink synchronization indication message, where the uplink synchronization indication message includes the channel opportunity information. The access point may send the uplink synchronization indication message to all stations in broadcast mode or to some stations in multicast mode. The uplink synchronization indication message may be a CTS frame.

In another implementable manner, before the sending, by the access point, an uplink synchronization indication message, the method further includes:
sending, by the access point, a beacon frame, where the beacon frame includes information about a sending time at which the access point sends the uplink synchronization indication message within a current beacon period, so that a station that has data to be sent maintains an awake state at the time at which the uplink synchronization indication message is sent, and receives the uplink synchronization indication message, which is more power-saving for the station.

Further, the uplink synchronization indication message may further include station indication information, where the station indication information includes an identifier of a station that is allowed to send a sending request message, and the station indication information is used by a station that has data to be sent, to determine, after receiving the uplink synchronization indication message, that a sending request message can be sent to the access point. Specifically, after receiving the uplink synchronization indication message, the station that has data to be sent determines, according to the station indication information included in the uplink synchronization indication message, whether the station that has data to be sent can send a sending request message to the access point. The station indication information may include multiple station identifiers, or may include one station identifier and a quantity N of N stations that are obtained by counting from a station that corresponds to the station identifier, or may include two station identifiers, specifying that stations between the two station identifiers can send a sending request message. In this way, stations that have data to be sent can be allocated to each beacon frame period, thereby reducing a conflict caused by data sending. Herein, it should be noted that, if no station sends a sending request message after the access point sends an uplink synchronization indication message, the access point needs to change station indication information in the uplink synchronization indication message, and resend an uplink synchronization indication message, until it is determined that a station that has data to be sent has an opportunity to send a sending request message.

S102. The access point allocates, according to the received sending request message, to the station that sends the received sending request message, a channel resource that is used for sending uplink data.
S103. The access point sends, according to the allocated channel resource, a sending acknowledgement message to the station that sends the received sending request message, so that stations that receive the sending acknowledgement message use channel resources to concurrently send uplink data.

Specifically, in an implementable manner, the sending request message includes channel usage time information that is needed to send uplink data by the station that sends the sending request message or volume information of uplink data to be sent by the station, and in this case, the allocating, by the access point according to the received sending request message, to the station that sends the received sending request message, a channel resource that is used for sending uplink data is specifically:
allocating, by the access point according to the channel usage time information that is needed by the station to send the uplink data or the volume information of the uplink data to be sent by the station, where the information is included in the received sending request message, to the station that sends the received sending request message, a subchannel used for sending uplink data.
The sending, by the access point according to the allocated channel resource, a sending acknowledgement message to the station that sends the received sending request message is specifically:
sending, by the access point by using the subchannel allocated to the station, the sending acknowledgement message to the station that sends the received sending request message.
In another implementable manner, the allocating, by the access point according to the received sending request message, to the station that sends the received sending request message, a channel resource that is used for sending uplink data is specifically:
allocating, by the access point according to the received sending request message, one or more subchannels that are used for sending uplink data, and a corresponding channel usage time to the station that sends the received sending request message.
Further, the sending request message includes subchannel indication information that is used by the station to send uplink data, where the subchannel indication information includes one or more subchannels that are used for sending the sending request message and that are indicated by the station; and the allocating, by the access point according to the received sending request message, to the station that sends the received sending request message, a channel resource that is used for sending uplink data is specifically:
allocating, by the access point according to the subchannel indication information included in the received sending request message, one or more subchannels that are used for sending uplink data, and a corresponding channel usage time to the station that sends the received sending request message. According to a subchannel that has an idle channel and that is indicated by the station, the access point can better allocate, to the station, a subchannel that is used for sending uplink data.
The sending, by the access point according to the allocated channel resource, a sending acknowledgement message to the station that sends the received sending request message is specifically:
sending, by the access point by using the one or more subchannels that are used for sending uplink data and that are allocated to the station, the sending acknowledgement message to the station that sends the received sending request message, where the sending acknowledgement message includes the one or more subchannels that are used for sending uplink data and that are allocated to the station, and the corresponding channel usage time.

A transmit address field of the sending request message includes association identifier information of the station that sends the sending request message, and the subchannel indication information. The subchannel indication information includes the one or more subchannels that are used for sending the sending request message and that are indicated by the station.

A receive address field of the sending acknowledgement message includes association identifier information of the station that receives the sending acknowledgement message, one or more subchannels that are used for sending uplink data and that are allocated by the access point to the station that receives the sending acknowledgement message, and corresponding channel usage time information.

In the foregoing two implementation manners, a duration field of the sending request message includes at least a channel usage time that is needed to send uplink data by the station that has data to be sent, so that another station that receives the sending request message sets a network allocation vector time value according to the channel usage time, and no longer contends for a channel within a corresponding network allocation vector time. Therefore, a conflict caused by data sending can be avoided.

Further, the method further includes:
concurrently sending, by the access point after receiving the uplink data that is sent by the station, an acknowledgement message to stations that send the received uplink data, which may be: concurrently sending, by the access point, on one of subchannels used when the station sends the uplink data, or on a corresponding subchannel on which the station sends the sending request message, the acknowledgement message to the stations that successfully send the uplink data.

According to the data transmission method provided in this embodiment of the present invention, an access point sends channel opportunity information, so that stations that have data to be sent randomly select, after receiving the channel opportunity information, a channel opportunity from the channel opportunity information, and concurrently send a sending request message to the access point; then the access point allocates, according to the received sending request message, to a station that sends the received sending request message, a channel resource that is used for sending uplink data; and finally, the access point sends, according to the allocated channel resource, a sending acknowledgement message to the station that sends the received sending request message, so that stations that receive the sending acknowledgement message use channel resources to concurrently send uplink data. Therefore, a synchronization requirement that multiple stations use different subcarriers to concurrently send data can be well met.

FIG. 2 is a flowchart of Embodiment 2 of a data transmission method according to the present invention. This embodiment is described by using an example in which a station is used as an execution body. As shown in FIG. 2, the method of this embodiment may include:
S201. A station receives channel opportunity information sent by an access point, where the channel opportunity information includes at least one channel opportunity, and the channel opportunity is a subchannel that can be used by the station to send a sending request message to the access point, and a corresponding subchannel usage time.

Stations in this embodiment all refer to stations that have data to be sent. There are two implementable manners for receiving, by a station, channel opportunity information sent by an access point.

Manner 1. The station receives a beacon frame sent by the access point, where the beacon frame includes the channel opportunity information.

Manner 2. The station receives an uplink synchronization indication message sent by the access point, where the uplink synchronization indication message includes the channel opportunity information. The uplink synchronization indication message may be a CTS frame.

Before the receiving, by the station, an uplink synchronization indication message sent by the access point, the method further includes:
receiving, by the station, a beacon frame sent by the access point, where the beacon frame includes a sending time at which the access point sends the uplink synchronization indication message within a current beacon period; and
maintaining, by the station, an awake state at the time at which the uplink synchronization indication message is sent, and receiving the uplink synchronization indication message that is sent by the access point at the sending time, which is more power-saving for the station.

Further, the uplink synchronization indication message further includes station indication information, where the station indication information includes an identifier of a station that is allowed to send a sending request message. Specifically, the station indication information may include multiple station identifiers, or may include one station identifier and a quantity N of N stations that are obtained by counting from a station that corresponds to the station identifier, or may include two station identifiers, specifying that stations between the two station identifiers can send a sending request message. In this way, stations that have data to be sent can be allocated to each beacon frame period, thereby reducing a conflict caused by data sending. Herein, it should be noted that, if no station sends a sending request message after the access point sends an uplink synchronization indication message, the access point needs to change station indication information in the uplink synchronization indication message, and resend an uplink synchronization indication message, until it is determined that a station that has data to be sent has an opportunity to send a sending request message. After the receiving, by the station, the uplink synchronization indication message that is sent by the access point, the method includes: determining, according to the station indication information, that the sending request message can be sent to the access point. Correspondingly, the randomly selecting, by the station, a channel opportunity from the channel opportunity information, and sending the sending request message to the access point specifically includes:
after determining, according to the station indication information, that the sending request message can be sent to the access point, randomly selecting, by the station, a channel opportunity from the channel opportunity information, and sending the sending request message to the access point.

S202. The station randomly selects a channel opportunity from the channel opportunity information, and sends the sending request message to the access point, so that the access point allocates, according to the received sending request message, to the station that sends the received sending request message, a channel resource that is used for sending uplink data, and sends, according to the allocated channel resource, a sending acknowledgement message to the station that sends the received sending request message.

S203. The station sends, after receiving the sending acknowledgement message, uplink data by using the allocated channel resource.

Specifically, in an implementable manner, the sending request message includes channel usage time information that is needed to send uplink data by the station that sends the sending request message or volume information of uplink data to be sent by the station that sends the sending request message, so that the access point allocates, according to the channel usage time information that is needed by the station to send the uplink data or the volume information of the uplink data to be sent by the station, where the information is included in the received sending request message, to the station that sends the received sending request message, a subchannel used for sending uplink data, and sends, by using the allocated subchannel, the sending acknowledgement message to the station that sends the received sending request message.

In another implementable manner, the sending request message includes subchannel indication information that is used to send uplink data by the station that sends the sending request message, so that the access point allocates, according to the subchannel indication information included in the received sending request message, one or more subchannels that are used for sending uplink data, and a corresponding channel usage time to the station that sends the received sending request message, and sends the sending acknowledgement message to the station by using the one or more subchannels that are used for sending uplink data and that are allocated to the station that sends the received sending request message, where the sending acknowledgement message includes the one or more subchannels that are used for sending uplink data and that are allocated to the station, and the corresponding channel usage time.

A transmit address field of the sending request message includes association identifier information of the station that sends the sending request message, and the subchannel indication information.

A receive address field of the sending acknowledgement message includes association identifier information of the station that receives the sending acknowledgement message, one or more subchannels that are used for sending uplink data and that are allocated by the access point, and corresponding channel usage time information.

In the foregoing two implementation manners, a duration field of the sending request message includes at least a channel usage time that is needed to send uplink data by the station that has data to be sent, so that another station that receives the sending request message sets a network allocation vector time value according to the channel usage time, and no longer contends for a channel within a corresponding network allocation vector time.

Further, the method further includes: receiving, by the station, an acknowledgement message that is sent by the access point after the access point receives the uplink data.

According to the data transmission method provided in this embodiment, a station that has data to be sent receives channel opportunity information sent by an access point, randomly selects a channel opportunity from the channel opportunity information, and sends a sending request message to the access point, so that the access point allocates, to the station according to the received sending request message, a channel resource that is used for sending uplink data, and sends a sending acknowledgement message to the station according to the allocated channel resource, so that the station uses, after receiving the sending acknowledgement message, the allocated channel resource to send uplink data. Therefore, a synchronization requirement that multiple stations use different subcarriers to concurrently send data can be well met.

The technical solutions of the method embodiments shown above are described in detail by using two specific embodiments below.

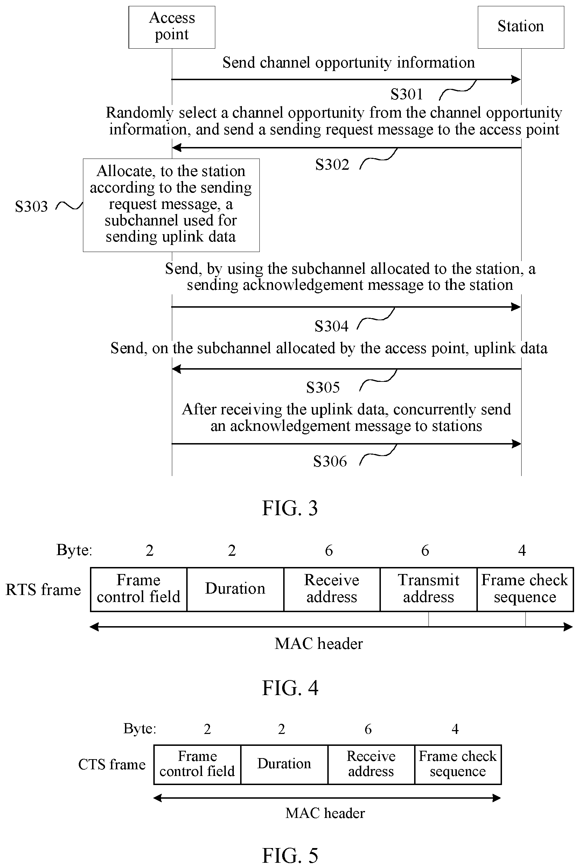

FIG. 3 is a signaling interaction diagram of Embodiment 3 of a data transmission method according to the present invention. As shown in FIG. 3, the method of this embodiment may include:
S301. An access point sends channel opportunity information, where the channel opportunity information includes at least one channel opportunity, and the channel opportunity is a subchannel that can be used by a station to send a sending request message to the access point, and a corresponding subchannel usage time.

There are two implementable manners for sending channel opportunity information by an access point.

Manner 1. The access point sends a beacon frame, where the beacon frame includes the channel opportunity information. The access point may send the beacon frame to all stations in broadcast mode or to some stations in multicast mode.

Manner 2. The access point sends an uplink synchronization indication message, where the uplink synchronization indication message includes the channel opportunity information. The access point may send the uplink synchronization indication message to all stations in broadcast mode or to some stations in multicast mode. The uplink synchronization indication message may be a CTS frame.

In another implementable manner, before the sending, by the access point, an uplink synchronization indication message, the method further includes:
sending, by the access point, a beacon frame, where the beacon frame includes a sending time at which the access point sends the uplink synchronization indication message within a current beacon period, so that a station that has data to be sent maintains an awake state at the time at which the uplink synchronization indication message is sent, and receives the uplink synchronization indication message, which is more power-saving for the station.

Further, the uplink synchronization indication message may further include station indication information, where the station indication information includes an identifier of a station that is allowed to send a sending request message, and the station indication information is used by a station that has data to be sent, to determine, after receiving the uplink synchronization indication message, that a sending request message can be sent to the access point. The station indication information may include multiple station identifiers, or may include one station identifier and a quantity N of N stations that are obtained by counting from a station that corresponds to the station identifier, or may include two station identifiers, specifying that stations between the two station identifiers can send a sending request message. In this way, stations that have data to be sent can be allocated to each beacon frame period, thereby reducing a conflict caused by data sending. Herein, it should be noted that, if no station sends a sending request message after the access point sends an uplink synchronization indication message, the access point needs to change station indication information in the uplink synchronization indication message, and resend an uplink synchronization indication message, until it is determined that a station that has data to be sent has an opportunity to send a sending request message.

S302. After the station receives the channel opportunity information sent by the access point, the station randomly selects a channel opportunity from the channel opportunity information, and sends the sending request message to the access point.

The sending request message includes channel usage time information that is needed to send uplink data by the station that has data to be sent or volume information of uplink data to be sent by the station. Specifically, a duration field of the sending request message includes at least a channel usage time that is needed by the station to send uplink data, so that another station that receives the sending request message sets a network allocation vector time value according to the channel usage time, and no longer contends for a channel within a corresponding network allocation vector time. Therefore, a conflict caused by data sending can be avoided. For example, the sending request message is an RTS frame. FIG. 4 is a schematic format diagram of an RTS frame in Embodiment 3 of a data transmission method according to the present invention. As shown in FIG. 4, a Media Access Control layer (MAC) header of the RTS frame includes a frame control field (2 bytes), a duration field (2 bytes), a receive address field (6 bytes), a transmit address field (6 bytes), and a frame check sequence (4 bytes).

S303. For a station that successfully sends a sending request message, the access point allocates, according to channel usage time information that is needed by the station to send uplink data or volume information of uplink data to be sent by the station, where the information is included in the received sending request message, to the station that sends the received sending request message, a subchannel used for sending uplink data.

S304. The access point sends, by using the subchannel allocated to the station, a sending acknowledgement message to the station that sends the received sending request message.

After sending the sending request message, the station waits on each subchannel to receive the sending acknowledgement message, and identifies and determines a subchannel on which the sending acknowledgement message is sent to the station. For a case in which a same channel opportunity is selected to send sending request messages to the access point, because the access point cannot identify conflicting sending request messages, the sending request messages are considered as invalid messages, and for an invalid sending request message, the access point does not return a request acknowledgement message.

Herein, it should be noted that, in the sending acknowledgement message returned by the access point, the access point not only may determine a value of a "duration" field in the sending acknowledgement message by means of a method defined in an existing standard, but also may perform recalculation to obtain a value of a "duration" field in the sending acknowledgement message according to a value of a "duration" field in the sending request message and a quantity of subchannels that are actually allocated to the station. For example, the sending acknowledgement message is a CTS frame. FIG. 5 is a schematic format diagram of a CTS frame in Embodiment 3 of a data transmission method according to the present invention. As shown in FIG. 5, a Media Access Control layer (MAC) header of the CTS frame includes a frame control field (2 bytes), a duration field (2 bytes), a receive address field (6 bytes), and a frame check sequence (4 bytes).

S305. After receiving the sending acknowledgement message, the station sends, on the subchannel allocated by the access point, uplink data.

Herein, it means that all stations that receive the sending acknowledgement message separately and concurrently send, on subchannels allocated by the access point, uplink data. It should be noted that, when the access point allocates multiple subchannels to the station as channel resources for sending uplink data, the station needs to copy, to each subchannel, content of a physical frame header that includes physical frame length information and concurrently send the content, so that another station sets, when receiving an uplink data frame, a network allocation vector (NAV) time value of the another station by using frame length information of a corresponding physical frame header, so that within such specified duration, the another station no longer contends for a channel, and a conflict can be avoided.

S306. After receiving the uplink data sent by the station, the access point separately and concurrently sends an acknowledgement message to stations that successfully send uplink data.

The access point may concurrently send, by using one of subchannels used when the station sends the uplink data, or by using a corresponding subchannel on which the station sends the sending request message, the acknowledgement message to the stations that successfully send the uplink data.

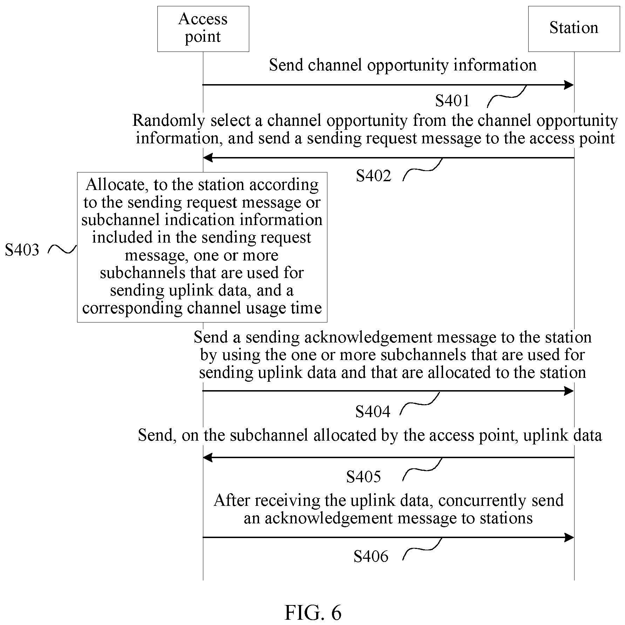

FIG. 6 is a signaling interaction diagram of Embodiment 4 of a data transmission method according to the present invention. As shown in FIG. 6, the method of this embodiment may include:
S401. An access point sends channel opportunity information, where the channel opportunity information includes at least one channel opportunity, and the channel opportunity is a subchannel that can be used by a station to send a sending request message to the access point, and a corresponding subchannel usage time.

There are two implementable manners for sending channel opportunity information by an access point.

Manner 1. The access point sends a beacon frame, where the beacon frame includes the channel opportunity information. The access point may send the beacon frame to all stations in broadcast mode or to some stations in multicast mode.

Manner 2. The access point sends an uplink synchronization indication message, where the uplink synchronization indication message includes the channel opportunity information. The access point may send the uplink synchronization indication message to all stations in broadcast mode or to some stations in multicast mode. The uplink synchronization indication message may be a CTS frame.

In another implementable manner, before the sending, by the access point, an uplink synchronization indication message, the method further includes:
sending, by the access point, a beacon frame, where the beacon frame includes a sending time at which the access point sends the uplink synchronization indication message within a current beacon period, so that a station that has data to be sent maintains an awake state at the time at which the uplink synchronization indication message is sent, and receives the uplink synchronization indication message, which is more power-saving for the station.

Further, the uplink synchronization indication message may further include station indication information, where the station indication information includes an identifier of a station that is allowed to send a sending request message, and the station indication information is used by a station that has data to be sent, to determine, after receiving the uplink synchronization indication message, that a sending request message can be sent to the access point. The station indication information may include multiple station identifiers, or may include one station identifier and a quantity N of N stations that are obtained by counting from a station that corresponds to the station identifier, or may include two station identifiers, specifying that stations between the two station identifiers can send a sending request message. In this way, stations that have data to be sent can be allocated to each beacon frame period, thereby reducing a conflict caused by data sending. Herein, it should be noted that, if no station sends a sending request message after the access point sends an uplink synchronization indication message, the access point needs to change station indication information in the uplink synchronization indication message, and resend an uplink synchronization indication message, until it is determined that a station that has data to be sent has an opportunity to send a sending request message.

S402. After the station receives the channel opportunity information sent by the access point, the station randomly selects a channel opportunity from the channel opportunity information, and sends the sending request message to the access point.

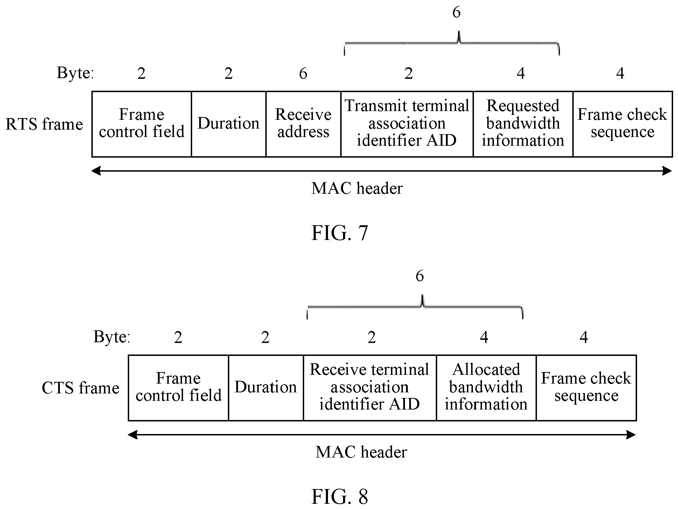

Further, the sending request message may further include subchannel indication information that is used to send uplink data by the station that has data to be sent, where the subchannel indication information includes one or more subchannels that are used for sending the sending request message and that are indicated by the station. According to a subchannel that has an idle channel and that is indicated by the station, the access point can better allocate, to the station, a subchannel that is used for sending uplink data. The subchannel indication information may be specifically: a transmit address field of the sending request message includes association identifier information of the station that sends the sending request message, and the subchannel indication information. The sending request message is an RTS frame, and a specific indication manner is shown in FIG. 7. FIG. 7 is a schematic format diagram of an RTS frame in Embodiment 4 of a data transmission method according to the present invention. As shown in FIG. 7, a Media Access Control layer (MAC) header of the RTS frame includes a frame control field (2 bytes), a duration field (2 bytes), a receive address field (6 bytes), a transmit terminal association identifier AID field (2 bytes), a requested bandwidth information field (4 bytes), and a frame check sequence (4 bytes). The transmit terminal association identifier AID field is used to carry the association identifier information of the station that sends the sending request message, and the requested bandwidth information field is used to carry the subchannel indication information, where the subchannel indication information is, for example, number information of a subchannel. It should be noted that, because multiple stations randomly select a sending opportunity for sending a sending request message, multiple stations may select a same sending opportunity to send an RTS message to the access point; in this case, RTS messages sent by the multiple stations may be in conflict. In addition, a duration value of a "duration" field in the RTS frame may still be determined by the station according to channel usage duration that is needed by the station to use a subchannel to send data, so that another station that receives the RTS frame uses the duration value to set an NAV time value of the another station, so that within such specified duration, the another station no longer contends for a channel.

S403. The access point allocates, according to the received sending request message or subchannel indication information included in the sending request message, one or more subchannels that are used for sending uplink data, and a corresponding channel usage time to the station that sends the received sending request message.

S404. The access point sends, by using the one or more subchannels that are used for sending uplink data and that are allocated to the station, a sending acknowledgement message to the station that sends the received sending request message, where the sending acknowledgement message includes the one or more subchannels that are used for sending uplink data and that are allocated to the station, and the corresponding channel usage time.

A receive address field of the sending acknowledgement message includes association identifier information of the station that receives the sending acknowledgement message, one or more subchannels that are used for sending uplink data and that are allocated by the access point to the station, and corresponding channel usage time information.

A specific indication manner is shown in FIG. 8. FIG. 8 is a schematic format diagram of a CTS frame in Embodiment 4 of a data transmission method according to the present invention. As shown in FIG. 8, a Media Access Control layer (MAC) header of the CTS frame includes a frame control field (2 bytes), a duration field (2 bytes), a receive terminal association identifier AID field (2 bytes), an allocated bandwidth information field (4 bytes), and a frame check sequence (4 bytes). The receive terminal association identifier AID field is used to carry the association identifier information of the station that receives the sending acknowledgement message, and the requested bandwidth information field is used to carry the one or more subchannels that are used for sending uplink data and that are allocated by the access point to the station, and the corresponding channel usage time information. For example, specific channel resource information in the allocated bandwidth information field may be indicated by means of at least the following method: values of 12 binary digits in four bytes are used to indicate number information that corresponds to the subchannel that is allocated by the access point to the station, then values of 12 binary digits thereof are used to indicate a starting time at which the station can use the allocated subchannel, and finally, values of 8 remaining binary digits are used to indicate duration in which the station can use the allocated subchannel. For a case in which a same sending opportunity is selected to send RTS messages to the access point, because the access point cannot identify conflicting RTS messages, the RTS messages are considered as invalid messages, and for an invalid RTS message, the access point does not send a CTS message. In this step, it should be noted that, in the CTS message sent by the access point, the access point not only may determine a value of a "duration" field in the CTS message according to a value of a "duration" field in the RTS message, but also may perform recalculation to obtain a channel usage time according to a value of a "duration" field in the RTS message and a quantity of subchannels that are actually allocated to the station.

S405. After receiving the sending acknowledgement message, the station sends, on the subchannel allocated by the access point, uplink data.

Specifically, it means that all stations that receive the sending acknowledgement message separately and concurrently send, on subchannels allocated by the access point, uplink data. The station determines, according to allocated bandwidth information included in the received CTS message that includes association identifier information of the station, a channel resource allocated by the access point to the station, and then multiple stations separately and concurrently send, on channel resources allocated by the access point to the multiple stations, uplink data. It should be noted that, when the access point allocates multiple subchannels to the station as channel resources for sending uplink data, the station needs to copy, to each subchannel, content of a physical frame header that includes physical frame length information and concurrently send the content, so that another station sets, when receiving an uplink data frame, an NAV time value of the another station by using frame length information of a corresponding physical frame header, so that within such specified duration, the another STA no longer contends for a channel.

S406. After receiving the uplink data sent by the station, the access point separately and concurrently sends an acknowledgement message to stations that successfully send uplink data.

The access point may concurrently send, by using one of subchannels used when the station sends the uplink data, or by using a corresponding subchannel on which the station sends the sending request message, the acknowledgement message to the stations that successfully send the uplink data.

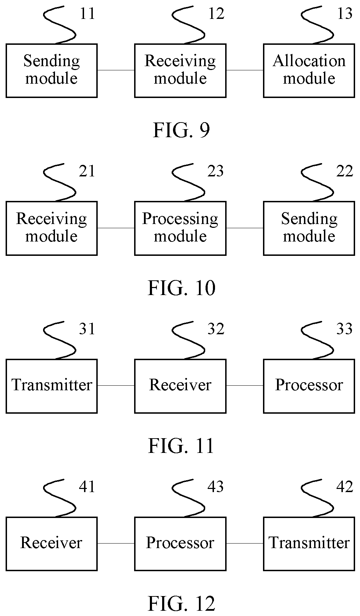

FIG. 9 is a schematic structural diagram of Embodiment 1 of an access point according to the present invention. As shown in FIG. 9, the access point of this embodiment may include: a sending module 11, a receiving module 12, and an allocation module 13, where the sending module 11 is configured to send channel opportunity information, where the channel opportunity information includes at least one channel opportunity, and the channel opportunity is a subchannel that can be used by a station to send a sending request message to the access point, and a corresponding subchannel usage time; the receiving module 12 is configured to receive the sending request message sent by the station; and the allocation module 13 is configured to allocate, according to the sending request message, to the station that sends the received sending request message, a channel resource that is used for sending uplink data, where the sending module 11 is further configured to send, according to the allocated channel resource, a sending acknowledgement message to the station that sends the received sending request message, so that stations that receive the sending acknowledgement message use channel resources to concurrently send uplink data.

Further, the sending, by the sending module 11, channel opportunity information includes:
sending, by the sending module 11, a beacon frame, where the beacon frame includes the channel opportunity information; or sending an uplink synchronization indication message, where the uplink synchronization indication message includes the channel opportunity information, where the uplink synchronization indication message may be a CTS frame.

Further, before sending the uplink synchronization indication message, the sending module 11 is further configured to: send a beacon frame, where the beacon frame includes information about a sending time at which the access point sends the uplink synchronization indication message within a current beacon period, so that a station that has data to be sent maintains an awake state at the time at which the uplink synchronization indication message is sent, and receives the uplink synchronization indication message.

In an implementable manner, the uplink synchronization indication message may further include station indication information, where the station indication information includes an identifier of a station that is allowed to send a sending request message, and the station indication information is used by a station that has data to be sent, to determine, after receiving the uplink synchronization indication message, that a sending request message can be sent to the access point.

In the foregoing embodiment, in an implementable manner, the sending request message includes channel usage time information that is needed to send uplink data by the station that sends the sending request message or volume information of uplink data to be sent by the station that sends the sending request message, and the allocating, by the allocation module 13 according to the received sending request message, to the station that sends the received sending request message, a channel resource that is used for sending uplink data includes:
allocating, by the allocation module 13 according to the channel usage time information that is needed by the station to send the uplink data or the volume information of the uplink data to be sent by the station, where the information is included in the received sending request message, to the station that sends the received sending request message, a subchannel used for sending uplink data; and
the sending, by the sending module 11 according to the allocated channel resource, a sending acknowledgement message to the station that sends the received sending request message includes:
   sending, by the sending module 11 by using the subchannel allocated to the station, the sending acknowledgement message to the station that sends the received sending request message.
In another implementable manner, the sending request message includes subchannel indication information that is used by the station to send uplink data, and the allocating, by the allocation module 13 according to the received sending request message, to the station that sends the received sending request message, a channel resource that is used for sending uplink data includes:
allocating, by the allocation module 13 according to the received sending request message, one or more subchannels that are used for sending uplink data, and a corresponding channel usage time to the station that sends the received sending request message; and
the sending, by the sending module 11 according to the allocated channel resource, a sending acknowledgement message to the station that sends the received sending request message includes:
   sending, by the sending module 11 by using the one or more subchannels that are used for sending uplink data and that are allocated to the station, the sending acknowledgement message to the station that sends the received sending request message, where the sending acknowledgement message includes the one or more subchannels that are used for sending uplink data and that are allocated to the station, and the corresponding channel usage time.
In another implementable manner, the allocating, by the allocation module 13 according to the received sending request message, to the station that sends the received sending request message, a channel resource that is used for sending uplink data includes:
allocating, by the allocation module 13 according to the subchannel indication information included in the received sending request message, to the station that sends the received sending request message, one or more subchannels that are used for sending uplink data, and a corresponding channel usage time; and
the sending, by the sending module 11 according to the allocated channel resource, a sending acknowledgement message to the station that sends the received sending request message includes:
   sending, by the sending module 11 by using the one or more subchannels that are used for sending uplink data and that are allocated to the station, the sending acknowledgement message to the station that sends the received sending request message, where the sending acknowledgement message includes the one or more subchannels that are used for sending uplink data and that are allocated to the station, and the corresponding channel usage time.

Further, a transmit address field of the sending request message includes association identifier information of the station that sends the sending request message, and the subchannel indication information.

A receive address field of the sending acknowledgement message includes association identifier information of the station that receives the sending acknowledgement message, one or more subchannels that are used for sending uplink data and that are allocated by the access point to the station that receives the sending acknowledgement message, and corresponding channel usage time information.

In the foregoing embodiment, further, a duration field of the sending request message includes at least a channel usage time that is needed to send uplink data by the station that has data to be sent, so that another station that receives the sending request message sets a network allocation vector time value according to the channel usage time, and no longer contends for a channel within a corresponding network allocation vector time.

In the foregoing embodiment, further, the sending module 11 is further configured to:
after the receiving module 12 receives the uplink data that is sent by the station that receives the sending acknowledgement message, concurrently send an acknowledgement message to stations that send the received uplink data.
The concurrently sending, by the sending module 11, an acknowledgement message to stations that send the received uplink data includes:
concurrently sending, by the sending module 11, on one of subchannels used when the station sends the uplink data, or on a corresponding subchannel on which the station sends the sending request message, the acknowledgement message to the stations that send the received uplink data.

The access point of this embodiment may be used for performing the technical solution of the method embodiment shown in FIG. 1, and an implementation principle thereof is similar, which is not described herein again.

According to the access point provided in this embodiment, a sending module sends channel opportunity information, so that stations that have data to be sent randomly select, after receiving the channel opportunity information, a channel opportunity from the channel opportunity information, and concurrently send a sending request message to the access point; then an allocation module allocates, according to the sending request message received by a receiving module, to a station that sends the received sending request message, a channel resource that is used for sending uplink data; and finally, the sending module sends, according to the allocated channel resource, a sending acknowledgement message to the station that sends the received sending request message, so that stations that receive the sending acknowledgement message use channel resources to concurrently send uplink data. Therefore, a synchronization requirement that multiple stations use different subcarriers to concurrently send data can be well met.

FIG. 10 is a schematic structural diagram of Embodiment 1 of a station according to the present invention. As shown in FIG. 10, the station of this embodiment may include: a receiving module 21, a processing module 23, and a sending module 22, where the receiving module 21 is configured to receive channel opportunity information sent by an access point, where the channel opportunity information includes at least one channel opportunity, and the channel opportunity is a subchannel that can be used by the station to send a sending request message to the access point, and a corresponding subchannel usage time; the processing module 23 is configured to randomly select a channel opportunity from the channel opportunity information; and the sending module 22 is configured to send a sending request message to the access point by using the selected channel opportunity, so that the access point allocates, according to the received sending request message, to the station that sends the received sending request message, a channel resource that is used for sending uplink data, and sends, according to the allocated channel resource, a sending acknowledgement message to the station that sends the received sending request message, where the sending module 22 is further configured to send uplink data by using the allocated channel resource after receiving the sending acknowledgement message.

Further, the receiving, by the receiving module 21, channel opportunity information sent by an access point includes:
receiving, by the receiving module 21, a beacon frame sent by the access point, where the beacon frame includes the channel opportunity information; or receiving an uplink synchronization indication message sent by the access point, where the uplink synchronization indication message includes the channel opportunity information, where the uplink synchronization indication message may be a CTS frame.
Further, the receiving module 21 is further configured to:
before receiving the uplink synchronization indication message sent by the access point, receive a beacon frame sent by the access point, where the beacon frame includes information about a sending time at which the access point sends the uplink synchronization indication message within a current beacon period; and
maintain an awake state at the time at which the uplink synchronization indication message is sent, and receive the uplink synchronization indication message that is sent by the access point at the sending time.
In an implementable manner, the uplink synchronization indication message further includes station indication information, where the station indication information includes an identifier of a station that is allowed to send a sending request message, and the processing module 23 is further configured to:
after the receiving module receives the uplink synchronization indication message sent by the access point, determine, according to the station indication information, that the sending request message can be sent to the access point.

In the foregoing embodiment, in an implementable manner, the sending request message includes channel usage time information that is needed to send uplink data by the station that sends the sending request message or volume information of uplink data to be sent by the station that sends the sending request message, so that the access point allocates, according to the channel usage time information that is needed by the station to send the uplink data or the volume information of the uplink data to be sent by the station, where the information is included in the received sending request message, to the station that sends the received sending request message, a subchannel used for sending uplink data, and sends, by using the allocated subchannel, the sending acknowledgement message to the station that sends the received sending request message.

In another implementable manner, the sending request message includes subchannel indication information that is used to send uplink data by the station that sends the sending request message, so that the access point allocates, according to the subchannel indication information included in the received sending request message, one or more subchannels that are used for sending uplink data, and a corresponding channel usage time to the station that sends the received sending request message, and sends the sending acknowledgement message to the station by using the one or more subchannels that are used for sending uplink data and that are allocated to the station that sends the received sending request message, where the sending acknowledgement message includes the one or more subchannels that are used for sending uplink data and that are allocated to the station that sends the received sending request message, and the corresponding channel usage time.

Further, a transmit address field of the sending request message includes association identifier information of the station that sends the sending request message, and the subchannel indication information.

Further, a receive address field of the sending acknowledgement message includes association identifier information of the station that receives the sending acknowledgement message, one or more subchannels that are used for sending uplink data and that are allocated by the access point to the station, and corresponding channel usage time information.

In the foregoing embodiment, a duration field of the sending request message includes at least a channel usage time that is needed to send uplink data by the station that has data to be sent, so that another station that receives the sending request message sets a network allocation vector time value according to the channel usage time, and no longer contends for a channel within a corresponding network allocation vector time.

In the foregoing embodiment, further, the receiving module 21 is further configured to receive an acknowledgement message that is sent by the access point after the access point receives the uplink data.

The station of this embodiment may be used for performing the technical solution of the method embodiment shown in FIG. 2, and an implementation principle and a technical effect thereof are similar, which are not described herein again.

According to the station provided in this embodiment, a receiving module receives channel opportunity information sent by an access point; a sending module randomly selects a channel opportunity from the channel opportunity information, and sends a sending request message to the access point, so that the access point allocates, to the station according to the received sending request message, a channel resource that is used for sending uplink data, and sends a sending acknowledgement message to the station according to the allocated channel resource; and the receiving module uses, after receiving the sending acknowledgement message, the allocated channel resource to send uplink data. Therefore, a synchronization requirement that multiple stations use different subcarriers to concurrently send data can be well met.

A communications system provided in an embodiment of the present invention includes the access point shown in FIG. 9 and the station shown in FIG. 10.

FIG. 11 is a schematic structural diagram of Embodiment 2 of an access point according to the present invention. As shown in FIG. 11, the access point of this embodiment may include: a transmitter 31, a receiver 32, and a processor 33, where the transmitter 31 is configured to send channel opportunity information, where the channel opportunity information includes at least one channel opportunity, and the channel opportunity is a subchannel that can be used by a station to send a sending request message to the access point, and a corresponding subchannel usage time; the receiver 32 is configured to receive the sending request message sent by the station; and the processor 33 is configured to allocate, according to the sending request message, to the station that sends the received sending request message, a channel resource that is used for sending uplink data, where the transmitter 31 is further configured to send, according to the allocated channel resource, a sending acknowledgement message to the station that sends the received sending request message, so that stations that receive the sending acknowledgement message use channel resources to concurrently send uplink data.

Further, the sending, by the transmitter 31, channel opportunity information includes:
sending, by the transmitter 31, a beacon frame, where the beacon frame includes the channel opportunity information; or sending an uplink synchronization indication message, where the uplink synchronization indication message includes the channel opportunity information, where the uplink synchronization indication message may be a CTS frame.
Further, before sending the uplink synchronization indication message, the transmitter 31 is further configured to: send a beacon frame, where the beacon frame includes information about a sending time point at which the access point sends the uplink synchronization indication message within a current beacon period, so that a station that has data to be sent maintains an awake state at the time point at which the uplink synchronization indication message is sent, and receives the uplink synchronization indication message.

In an implementable manner, the uplink synchronization indication message may further include station indication information, where the station indication information includes an identifier of a station that is allowed to send a sending request message, and the station indication information is used by a station that has data to be sent, to determine, after receiving the uplink synchronization indication message, that a sending request message can be sent to the access point.

In the foregoing embodiment, in an implementable manner, the sending request message includes channel usage time information that is needed to send uplink data by the station that sends the sending request message or volume information of uplink data to be sent by the station that sends the sending request message, and the allocating, by the processor 33 according to the received sending request message, to the station that sends the received sending request message, a channel resource that is used for sending uplink data includes:
allocating, by the processor 33 according to the channel usage time information that is needed by the station to send the uplink data or the volume information of the uplink data to be sent by the station, where the information is included in the received sending request message, to the station that sends the received sending request message, a subchannel used for sending uplink data; and
the sending, by the transmitter 31 according to the allocated channel resource, a sending acknowledgement message to the station that sends the received sending request message includes:
   sending, by the transmitter 31 by using the subchannel allocated to the station, the sending acknowledgement message to the station that sends the received sending request message.

In another implementable manner, the sending request message includes subchannel indication information that is used by the station to send uplink data, and the allocating, by the processor 33 according to the received sending request message, to the station that sends the received sending request message, a channel resource that is used for sending uplink data includes:
allocating, by the processor 33 according to the received sending request message, one or more subchannels that are used for sending uplink data, and a corresponding channel usage time to the station that sends the received sending request message; and
the sending, by the transmitter 31 according to the allocated channel resource, a sending acknowledgement message to the station that sends the received sending request message includes:
   sending, by the transmitter 31 by using the one or more subchannels that are used for sending uplink data and that are allocated to the station, the sending acknowledgement message to the station that sends the received sending request message, where the sending acknowledgement message includes the one or more subchannels that are used for sending uplink data and that are allocated to the station, and the corresponding channel usage time.
In another implementable manner, the allocating, by the processor 33 according to the received sending request message, to the station that sends the received sending request message, a channel resource that is used for sending uplink data includes:
allocating, by the processor 33 according to the subchannel indication information included in the received sending request message, to the station that sends the received sending request message, one or more subchannels that are used for sending uplink data, and a corresponding channel usage time; and
the sending, by the transmitter 31 according to the allocated channel resource, a sending acknowledgement message to the station that sends the received sending request message includes:
   sending, by the transmitter 31 by using the one or more subchannels that are used for sending uplink data and that are allocated to the station, the sending acknowledgement message to the station that sends the received sending request message, where the sending acknowledgement message includes the one or more subchannels that are used for sending uplink data and that are allocated to the station, and the corresponding channel usage time.
Further, a transmit address field of the sending request message includes association identifier information of the station that can send the sending request message, and the subchannel indication information.

A receive address field of the sending acknowledgement message includes association identifier information of the station that receives the sending acknowledgement message, one or more subchannels that are used for sending uplink data and that are allocated by the access point to the station that receives the sending acknowledgement message, and a corresponding channel usage time; one or more subchannels that are used for sending uplink data and that are allocated by the access point to the station, and corresponding channel usage time information.

In the foregoing embodiment, further, a duration field of the sending request message includes at least a channel usage time that is needed to send uplink data by the station that has data to be sent, so that another station that receives the sending request message sets a network allocation vector time value according to the channel usage time, and no longer contends for a channel within a corresponding network allocation vector time.

In the foregoing embodiment, further, the transmitter 31 is further configured to:
after the receiver 32 receives the uplink data sent by the station, concurrently send an acknowledgement message to stations that successfully send the uplink data.
The concurrently sending, by the transmitter 31, an acknowledgement message to stations that send the received uplink data includes:
concurrently sending, by the transmitter 31, on one of subchannels used when the station sends the uplink data, or on a corresponding subchannel on which the station sends the sending request message, the acknowledgement message to the stations that send the received uplink data.
The access point of this embodiment may be used for performing the technical solution of the method embodiment shown in FIG. 1, and an implementation principle thereof is similar, which is not described herein again.

According to the access point provided in this embodiment, a transmitter sends channel opportunity information, so that stations that have data to be sent randomly select, after receiving the channel opportunity information, a channel opportunity from the channel opportunity information, and concurrently send a sending request message to the access point; then a processor allocates, according to the sending request message received by a receiver, to a station that sends the received sending request message, a channel resource that is used for sending uplink data; and finally, the transmitter sends, according to the allocated channel resource, a sending acknowledgement message to the station that sends the received sending request message, so that stations that receive the sending acknowledgement message use channel resources to concurrently send uplink data. Therefore, a synchronization requirement that multiple stations use different subcarriers to concurrently send data can be well met.

FIG. 12 is a schematic structural diagram of Embodiment 2 of a station according to the present invention. As shown in FIG. 12, the station of this embodiment may include: a receiver 41, a processor 43, and a transmitter 42, where the receiver 41 is configured to receive channel opportunity information sent by an access point, where the channel opportunity information includes at least one channel opportunity, and the channel opportunity is a subchannel that can be used by the station to send a sending request message to the access point, and a corresponding subchannel usage time; the processor 43 is configured to randomly select a channel opportunity from the channel opportunity information; and the transmitter 42 is configured to send a sending request message to the access point by using the selected channel opportunity, so that the access point allocates, according to the received sending request message, to the station that sends the received sending request message, a channel resource that is used for sending uplink data, and sends, according to the allocated channel resource, a sending acknowledgement message to the station that sends the received sending request message, where the transmitter 42 is further configured to send uplink data by using the allocated channel resource after receiving the sending acknowledgement message.

Further, the receiving, by the receiver 41, channel opportunity information sent by an access point includes:
receiving, by the receiver 41, a beacon frame sent by the access point, where the beacon frame includes the channel opportunity information; or receiving an uplink synchronization indication message sent by the access point, where the uplink synchronization indication message includes the channel opportunity information, where the uplink synchronization indication message may be a CTS frame.
Further, the receiver 41 is further configured to:
before receiving the uplink synchronization indication message sent by the access point, receive a beacon frame sent by the access point, where the beacon frame includes information about a sending time point at which the access point sends the uplink synchronization indication message within a current beacon period; and
maintain an awake state at the time point at which the uplink synchronization indication message is sent, and receive the uplink synchronization indication message that is sent by the access point at the sending time point.
In an implementable manner, the uplink synchronization indication message further includes station indication information, where the station indication information includes an identifier of a station that is allowed to send a sending request message, and the processor 43 is further configured to:
after the receiving module receives the uplink synchronization indication message sent by the access point, determine, according to the station indication information, that the sending request message can be sent to the access point.

In the foregoing embodiment, in an implementable manner, the sending request message includes channel usage time information that is needed to send uplink data by the station that sends the sending request message or volume information of uplink data to be sent by the station that sends the sending request message, so that the access point allocates, according to the channel usage time information that is needed by the station to send the uplink data or the volume information of the uplink data to be sent by the station, where the information is included in the received sending request message, to the station that sends the received sending request message, a subchannel used for sending uplink data, and sends, by using the allocated subchannel, the sending acknowledgement message to the station that sends the received sending request message.

In another implementable manner, the sending request message includes subchannel indication information that is used to send uplink data by the station that sends the sending request message, so that the access point allocates, according to the subchannel indication information included in the received sending request message, one or more subchannels that are used for sending uplink data, and a corresponding channel usage time to the station that sends the received sending request message, and sends the sending acknowledgement message to the station by using the one or more subchannels that are used for sending uplink data and that are allocated to the station that sends the received sending request message, where the sending acknowledgement message includes the one or more subchannels that are used for sending uplink data and that are allocated to the station that sends the received sending request message, and the corresponding channel usage time.

Further, a transmit address field of the sending request message includes association identifier information of the station that sends the sending request message, and the subchannel indication information.

Further, a receive address field of the sending acknowledgement message includes association identifier information of the station that receives the sending acknowledgement message, one or more subchannels that are used for sending uplink data and that are allocated by the access point to the station, and a corresponding channel usage time; one or more subchannels that are used for sending uplink data and that are allocated by the access point to the station, and corresponding channel usage time information.

In the foregoing embodiment, a duration field of the sending request message includes at least a channel usage time that is needed to send uplink data by the station that has data to be sent, so that another station that receives the sending request message sets a network allocation vector time value according to the channel usage time, and no longer contends for a channel within a corresponding network allocation vector time.

In the foregoing embodiment, further, the receiver 41 is further configured to receive an acknowledgement message that is sent by the access point after the access point receives the uplink data.

The station of this embodiment may be used for performing the technical solution of the method embodiment shown in FIG. 2, and an implementation principle and a technical effect thereof are similar, which are not described herein again.

According to the station provided in this embodiment, a receiver receives channel opportunity information sent by an access point; a transmitter randomly selects a channel opportunity from the channel opportunity information, and sends a sending request message to the access point, so that the access point allocates, to the station according to the received sending request message, a channel resource that is used for sending uplink data, and sends a sending acknowledgement message to the station according to the allocated channel resource; and the receiver uses, after receiving the sending acknowledgement message, the allocated channel resource to send uplink data. Therefore, a synchronization requirement that multiple stations use different subcarriers to concurrently send data can be well met.

A communications system provided in an embodiment of the present invention includes the access point shown in FIG. 11 and the station shown in FIG. 12.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disc, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments, without departing from the scope of the technical solutions of the embodiments of the present invention.

## Claims

1. A data transmission method for a Wireless Local Area Network, WLAN, wherein multiple stations share one channel to send data to an access point, the method comprises the steps:
dividing, by the access point, in advance the channel into subchannels, wherein each subchannel comprises multiple subcarriers,
sending (S101), by the access point,
- channel opportunity information, wherein the channel opportunity information comprises at least two channel opportunities, and each channel opportunity is one of the subchannels comprising the multiple subcarriers, so that each station can randomly select one channel opportunity from the channel opportunity information and the subchannel can be used by more than one station to send concurrently a respective sending request message to the access point using different subcarriers, and
- a corresponding subchannel usage time;
allocating (S102), by the access point, to at least two stations that each send the respective sending request message according to the received sending request message, a respective channel resource that is used for sending uplink data; wherein said allocating (S102) comprises allocating, by the access point according to the received sending request message, one or more subchannels that are used for sending uplink data, and a corresponding channel usage time to the respective station that sends the received sending request message; and
sending (S103), by the access point by using the allocated channel resource, a respective sending acknowledgement message to the at least two stations that send the received sending request message, so that the stations that receive the sending acknowledgement message use their respective channel resource comprising an assigned subcarrier to send uplink data, wherein said sending (S103) comprises sending, by the access point by using the one or more subchannels that are used for sending uplink data and that are allocated to the respective station that sends the received sending request message, the sending acknowledgement message to the respective station that sends the received sending request message, wherein the sending acknowledgement message comprises the one or more subchannels that are used for sending uplink data and that are allocated to the respective station that sends the received sending request message, and the corresponding channel usage time;
receiving, by the access point, the uplink data concurrently sent by each of the at least two stations on its one or more allocated subchannels during the corresponding subchannel usage time; and
in response to receiving the uplink data concurrently sent by the at least two stations, concurrently sending, by the access point, respective acknowledgement messages concurrently to stations which successfully send uplink data.

2. The method according to claim 1, wherein the sending (S101), by an access point, channel opportunity information comprises:
sending, by the access point, a beacon frame, wherein the beacon frame comprises the channel opportunity information.

3. The method according to claim 1, wherein the sending (S101), by an access point, channel opportunity information comprises:
sending, by the access point, an uplink synchronization indication message, wherein the uplink synchronization indication message comprises the channel opportunity information.

4. The method according to claim 3, before the sending, by the access point, an uplink synchronization indication message, further comprising:
sending, by the access point, a beacon frame, wherein the beacon frame comprises a sending time at which the access point sends the uplink synchronization indication message within a current beacon period, so that a station that has data to be sent maintains an awake state at the time at which the uplink synchronization indication message is sent, and receives the uplink synchronization indication message.

5. An access point for a Wireless Local Area Network, WLAN, wherein multiple stations share one channel to send data to an access point, wherein the access point is configured to divide in advance the channel into subchannels, wherein each subchannel comprises multiple subcarriers, and the access point comprises:
a sending module (11), configured to send channel opportunity information, wherein the channel opportunity information comprises at least two channel opportunities, and each channel opportunity is one of the subchannels comprising the multiple subcarriers, so that each station can randomly select one channel opportunity from the channel opportunity information and the subschannel can be used by more than one station to send concurrently a respective sending request message to the access point using different subcarriers, and a corresponding subchannel usage time;
a receiving module (12), configured to receive the sending request messages sent by at least two stations; and
an allocation module (13), configured to allocate, according to the received sending request messages, to each of the at least two stations that send the received sending request messages, a respective channel resource that is used for sending uplink data, wherein said allocate comprises allocate according to the received sending request message, one or more subchannels that are used for sending uplink data, and a corresponding channel usage time to the respective station that sends the received sending request message; wherein
the sending module (11) is further configured to send, by using the allocated channel resources, respective sending acknowledgement messages to the at least two stations that send the received sending request messages, so that stations that receive the sending acknowledgement messages use their respective channel resource comprising an assigned subcarrier to send uplink data, wherein said send comprises send, by using the one or more subchannels that are used for sending uplink data and that are allocated to the respective station that sends the received sending request message, the sending acknowledgement message to the respective station that sends the received sending request message, wherein the sending acknowledgement message comprises the one or more subchannels that are used for sending uplink data and that are allocated to the respective station that sends the received sending request message, and the corresponding channel usage time;
the receiving module (12) is further configured to receive the uplink data concurrently sent by each of the at least two stations on its one or more allocated subchannels during the corresponding subchannel usage time; and
the sending module (11) is further configured to send, in response to receiving the uplink data concurrently sent by the at least two stations, respective acknowledgement messages concurrently to stations which successfully send uplink data.

6. The access point according to claim 5, wherein the sending channel opportunity information comprises:
sending a beacon frame, wherein the beacon frame comprises the channel opportunity information.

7. The access point according to claim 5, wherein the sending channel opportunity information comprises:
sending an uplink synchronization indication message, wherein the uplink synchronization indication message comprises the channel opportunity information.

8. The access point according to claim 7, wherein before sending the uplink synchronization indication message, the sending module (11) is further configured to:
send a beacon frame, wherein the beacon frame comprises a sending time at which the access point sends the uplink synchronization indication message within a current beacon period, so that a station that has data to be sent maintains an awake state at the time at which the uplink synchronization indication message is sent, and receives the uplink synchronization indication message.

## Patentansprüche

1. Datenübertragungsverfahren für ein drahtloses lokales Netz, WLAN, wobei mehrere Stationen einen Kanal gemeinsam verwenden, um Daten zu einem Zugangspunkt zu senden, und das Verfahren die folgenden Schritte umfasst:
Unterteilen durch den Zugangspunkt im Voraus den Kanal in Unterkanäle, wobei jeder Unterkanal mehrere Unterträger umfasst,
Senden (S101) durch den Zugangspunkt von
- Kanalmöglichkeitsinformationen, wobei die Kanalmöglichkeitsinformationen mindestens zwei Kanalmöglichkeiten umfassen und jede Kanalmöglichkeit einer der Unterkanäle, die die mehreren Unterträger umfassen, ist, derart, dass jede Station eine Kanalmöglichkeit aus den Kanalmöglichkeitsinformationen beliebig wählen kann und der Unterkanal durch mehr als eine Station verwendet werden kann, um eine entsprechende Sendeanforderungsnachricht zum Zugangspunkt unter Verwendung verschiedener Unterträger gleichzeitig zu senden, und
- einer entsprechenden Unterkanalverwendungszeit;
Zuordnen (S102) durch den Zugangspunkt zu mindestens zwei Stationen, die jeweils die entsprechende Sendeanforderungsnachricht gemäß der empfangenen Sendeanforderungsnachricht senden, eines entsprechenden Kanalbetriebsmittels, das zum Senden von Aufwärtsstreckendaten verwendet wird; wobei das Zuordnen (S102) ein Zuordnen durch den Zugangspunkt gemäß der empfangenen Sendeanforderungsnachricht eines oder mehrerer Unterkanäle, die zum Senden von Aufwärtsstreckendaten verwendet werden, und einer entsprechenden Kanalverwendungszeit zur entsprechenden Station, die die empfangene Sendeanforderungsnachricht sendet, umfasst; und
Senden (S103) durch den Zugangspunkt unter Verwendung des zugeordneten Kanalbetriebsmittels einer entsprechenden Sendebestätigungsnachricht zu den mindestens zwei Stationen, die die empfangene Sendeanforderungsnachricht senden, derart, dass die Stationen, die die Sendebestätigungsnachricht empfangen, ihr entsprechendes Kanalbetriebsmittel, das einen zugewiesenen Unterträger umfasst, verwenden, um Aufwärtsstreckendaten zu senden, wobei das Senden (S103) ein Senden durch den Zugangspunkt unter Verwendung des einen oder der mehreren Unterkanäle, die zum Senden von Aufwärtsstreckendaten verwendet werden und die der entsprechenden Station, die die empfangene Sendeanforderungsnachricht sendet, zugeordnet sind, der Sendebestätigungsnachricht zur entsprechenden Station, die die empfangene Sendeanforderungsnachricht sendet, umfasst, wobei die Sendebestätigungsnachricht den einen oder die mehreren Unterkanäle, die zum Senden von Aufwärtsstreckendaten verwendet werden und die der entsprechenden Station, die die empfangene Sendeanforderungsnachricht sendet, zugeordnet sind, und die entsprechende Kanalverwendungszeit umfasst;
Empfangen durch den Zugangspunkt der Aufwärtsstreckendaten, die durch jede der mindestens zwei Stationen in ihrem einen oder ihren mehreren zugeordneten Unterkanälen während der entsprechenden Unterkanalverwendungszeit gleichzeitig gesendet werden; und
gleichzeitiges Senden durch den Zugangspunkt in Reaktion auf das Empfangen der Aufwärtsstreckendaten, die durch die mindestens zwei Stationen gleichzeitig gesendet wurden, entsprechender Bestätigungsnachrichten gleichzeitig zu Stationen, die Aufwärtsstreckendaten erfolgreich senden.

2. Verfahren nach Anspruch 1, wobei das Senden (S101) durch einen Zugangspunkt von Kanalmöglichkeitsinformationen Folgendes umfasst:
Senden durch den Zugangspunkt eines Bakenrahmens, wobei der Bakenrahmen die Kanalmöglichkeitsinformationen umfasst.

3. Verfahren nach Anspruch 1, wobei das Senden (S101) durch einen Zugangspunkt von Kanalmöglichkeitsinformationen Folgendes umfasst:
Senden durch den Zugangspunkt einer Aufwärtsstreckensynchronisationsanzeigenachricht, wobei die Aufwärtsstreckensynchronisationsanzeigenachricht die Kanalmöglichkeitsinformationen umfasst.

4. Verfahren nach Anspruch 3, das vor dem Senden durch den Zugangspunkt einer Aufwärtsstreckensynchronisationsanzeigenachricht ferner Folgendes umfasst:
Senden durch den Zugangspunkt eines Bakenrahmens, wobei der Bankenrahmen eine Sendezeit umfasst, zu der der Zugangspunkt die Aufwärtsstreckensynchronisationsanzeigenachricht in einem aktuellen Bakenzeitraum sendet, derart, dass eine Station, die zu sendende Daten besitzt, zu der Zeit, zu der die Aufwärtsstreckensynchronisationsanzeigenachricht gesendet wird, einen Wachzustand behält und die Aufwärtsstreckensynchronisationsanzeigenachricht empfängt.

5. Zugangspunkt für ein drahtloses lokales Netz, WLAN, wobei mehrere Stationen einen Kanal gemeinsam verwenden, um Daten zu einem Zugangspunkt zu senden, wobei der Zugangspunkt konfiguriert ist, im Voraus den Kanal in Unterkanäle zu unterteilen, wobei jeder Unterkanal mehrere Unterträger umfasst und der Zugangspunkt Folgendes umfasst:
ein Sendemodul (11), das konfiguriert ist zum Senden von Kanalmöglichkeitsinformationen, wobei die Kanalmöglichkeitsinformationen mindestens zwei Kanalmöglichkeiten umfassen und jede Kanalmöglichkeit einer der Unterkanäle, die die mehreren Unterträger umfassen, ist, derart, dass jede Station eine Kanalmöglichkeit aus den Kanalmöglichkeitsinformationen beliebig wählen kann und der Unterkanal durch mehr als eine Station verwendet werden kann, um eine entsprechende Sendeanforderungsnachricht zum Zugangspunkt unter Verwendung verschiedener Unterträger gleichzeitig zu senden, und einer entsprechenden Unterkanalverwendungszeit;
ein Empfangsmodul (12), das konfiguriert ist zum Empfangen der Sendeanforderungsnachrichten, die durch mindestens zwei Stationen gesendet werden; und
ein Zuordnungsmodul (13), das konfiguriert ist zum Zuordnen gemäß der empfangenen Sendeanforderungsnachrichten zu jeder der mindestens zwei Stationen, die die empfangenen Sendeanforderungsnachrichten senden, eines entsprechenden Kanalbetriebsmittels, das zum Senden von Aufwärtsstreckendaten verwendet wird, wobei das Zuordnen ein Zuordnen gemäß der empfangenen Sendeanforderungsnachricht eines oder mehrerer Unterkanäle, die zum Senden von Aufwärtsstreckendaten verwendet werden, und einer entsprechenden Kanalverwendungszeit zur entsprechenden Station, die die empfangene Sendeanforderungsnachricht sendet, umfasst; wobei
das Sendemodul (11) ferner konfiguriert ist zum Senden unter Verwendung der zugeordneten Kanalbetriebsmittel entsprechender Sendebestätigungsnachrichten zu den mindestens zwei Stationen, die die empfangenen Sendeanforderungsnachrichten senden, derart, dass Stationen, die die Sendebestätigungsnachrichten empfangen, ihr entsprechendes Kanalbetriebsmittel, das einen zugewiesenen Unterträger umfasst, verwenden, um Aufwärtsstreckendaten zu senden, wobei das Senden ein Senden unter Verwendung des einen oder der mehreren Unterkanäle, die zum Senden von Aufwärtsstreckendaten verwendet werden und die der entsprechenden Station, die die empfangene Sendeanforderungsnachricht sendet, zugeordnet sind, der Sendebestätigungsnachricht zur entsprechenden Station, die die empfangene Sendeanforderungsnachricht sendet, umfasst, wobei die Sendebestätigungsnachricht den einen oder die mehreren Unterkanäle, die zum Senden von Aufwärtsstreckendaten verwendet werden und die der entsprechenden Station, die die empfangene Sendeanforderungsnachricht sendet, zugeordnet sind, und die entsprechende Kanalverwendungszeit umfasst;
das Empfangsmodul (12) ferner konfiguriert ist zum Empfangen der Aufwärtsstreckendaten, die durch jede der mindestens zwei Stationen in ihrem einen oder ihren mehreren zugeordneten Unterkanälen während der entsprechenden Unterkanalverwendungszeit gleichzeitig gesendet werden; und
das Sendemodul (11) ferner konfiguriert ist zum Senden in Reaktion auf das Empfangen der Aufwärtsstreckendaten, die durch die mindestens zwei Stationen gleichzeitig gesendet wurden, entsprechender Bestätigungsnachrichten gleichzeitig zu Stationen, die Aufwärtsstreckendaten erfolgreich senden.

6. Zugangspunkt nach Anspruch 5, wobei das Senden von Kanalmöglichkeitsinformationen Folgendes umfasst:
Senden eines Bakenrahmens, wobei der Bakenrahmen die Kanalmöglichkeitsinformationen umfasst.

7. Zugangspunkt nach Anspruch 5, wobei das Senden von Kanalmöglichkeitsinformationen Folgendes umfasst:
Senden einer Aufwärtsstreckensynchronisationsanzeigenachricht, wobei die Aufwärtsstreckensynchronisationsanzeigenachricht die Kanalmöglichkeitsinformationen umfasst.

8. Zugangspunkt nach Anspruch 7, wobei das Sendemodul (11) ferner vor dem Senden der Aufwärtsstreckensynchronisationsanzeigenachricht konfiguriert ist zum Senden eines Bakenrahmens, wobei der Bankenrahmen eine Sendezeit umfasst, zu der der Zugangspunkt die Aufwärtsstreckensynchronisationsanzeigenachricht in einem aktuellen Bakenzeitraum sendet, derart, dass eine Station, die zu sendende Daten besitzt, zu der Zeit, zu der die Aufwärtsstreckensynchronisationsanzeigenachricht gesendet wird, einen Wachzustand behält und die Aufwärtsstreckensynchronisationsanzeigenachricht empfängt.

## Revendications

1. Procédé de transmission de données pour un réseau local sans fil, WLAN, dans lequel de multiples stations partagent un même canal pour envoyer des données à un point d'accès, le procédé comprenant les étapes suivantes :
la division à l'avance, par le point d'accès, du canal en sous-canaux, chaque sous-canal comprenant de multiples sous-porteuses,
l'envoi (S101), par le point d'accès,
- d'informations d'opportunités de canaux, les informations d'opportunités de canaux comprenant au moins deux opportunités de canaux et chaque opportunité de canal étant un des sous-canaux comprenant les multiples sous-porteuses, de telle sorte que chaque station puisse sélectionner de manière aléatoire une opportunité de canal à partir des informations d'opportunités de canaux et le sous-canal puisse être utilisé par plus d'une station pour envoyer simultanément un message de requête d'envoi respectif au point d'accès en utilisant des sous-porteuses différentes, et
- d'une durée d'utilisation de sous-canal correspondante ;
l'attribution (S 102), par le point d'accès, à au moins deux stations qui envoient chacune le message de requête d'envoi respectif conformément au message de requête d'envoi reçu, d'une ressource de canal respective qui est utilisée pour envoyer des données de liaison montante ; ladite attribution (S102) comprenant l'attribution, par le point d'accès conformément au message de requête d'envoi reçu, d'un ou plusieurs sous-canaux qui sont utilisés pour envoyer des données de liaison montante, et d'une durée d'utilisation de canal correspondante à la station respective qui envoie le message de requête d'envoi reçu ; et
l'envoi (S103), par le point d'accès à l'aide de la ressource de canal attribuée, d'un message d'acquittement d'envoi respectif aux au moins deux stations qui envoient le message de requête d'envoi reçu, de telle sorte que les stations qui reçoivent le message d'acquittement d'envoi utilisent leur ressource de canal respective comprenant une sous-porteuse attribuée pour envoyer des données de liaison montante, ledit envoi (S103) comprenant l'envoi, par le point d'accès à l'aide des un ou plusieurs sous-canaux utilisés pour envoyer des données de liaison montante et attribués à la station respective qui envoie le message de requête d'envoi reçu, du message d'acquittement d'envoi à la station respective qui envoie le message de requête d'envoi reçu, le message d'acquittement d'envoi comprenant les un ou plusieurs sous-canaux qui sont utilisés pour envoyer des données de liaison montante et qui sont attribués à la station respective qui envoie le message de requête d'envoi reçu, et la durée d'utilisation de canal correspondante ;
la réception, par le point d'accès, des données de liaison montante envoyées simultanément par chacune des au moins deux stations sur ses un ou plusieurs sous-canaux attribués durant la durée d'utilisation de sous-canal correspondante ; et
en réponse à la réception des données de liaison montante envoyées simultanément par les au moins deux stations, l'envoi simultané, par le point d'accès, de messages d'acquittement respectifs simultanément à des stations qui envoient avec succès des données de liaison montante.

2. Procédé selon la revendication 1, dans lequel l'envoi (S101), par un point d'accès, d'informations d'opportunités de canaux comprend :
l'envoi, par le point d'accès, d'une trame balise, la trame balise comprenant les informations d'opportunités de canaux.

3. Procédé selon la revendication 1, dans lequel l'envoi (S101), par un point d'accès, d'informations d'opportunités de canaux comprend :
l'envoi, par le point d'accès, d'un message d'indication de synchronisation de liaison montante, le message d'indication de synchronisation de liaison montante comprenant les informations d'opportunités de canaux.

4. Procédé selon la revendication 3, comprenant en outre avant l'envoi, par le point d'accès, d'un message d'indication de synchronisation de liaison montante :
l'envoi, par le point d'accès, d'une trame balise, la trame balise comprenant un instant d'envoi auquel le point d'accès envoie le message d'indication de synchronisation de liaison montante dans une période de balise courante, de telle sorte qu'une station qui possède des données à envoyer reste en état d'éveil à l'instant auquel le message d'indication de synchronisation de liaison montante est envoyé, et reçoive le message d'indication de synchronisation de liaison montante.

5. Point d'accès d'un réseau local sans fil, WLAN, dans lequel de multiples stations partagent un même canal pour envoyer des données à un point d'accès, le point d'accès étant configuré pour diviser à l'avance le canal en sous-canaux, chaque sous-canal comprenant de multiples sous-porteuses, et le point d'accès comprenant :
un module d'envoi (11), configuré pour envoyer des informations d'opportunités de canaux, les informations d'opportunités de canaux comprenant au moins deux opportunités de canaux et chaque opportunité de canal étant un des sous-canaux comprenant les multiples sous-porteuses, de telle sorte que chaque station puisse sélectionner de manière aléatoire une opportunité de canal à partir des informations d'opportunités de canaux et le sous-canal puisse être utilisé par plus d'une station pour envoyer simultanément un message de requête d'envoi respectif au point d'accès en utilisant des sous-porteuses différentes, et une durée d'utilisation de sous-canal correspondante ;
un module de réception (12), configuré pour recevoir les messages de requête d'envoi envoyés par au moins deux stations ; et
un module d'attribution (13), configuré pour attribuer, conformément aux messages de requête d'envoi reçus, à chacune des au moins deux stations qui envoient les messages de requête d'envoi reçus, une ressource de canal respective qui est utilisée pour envoyer des données de liaison montante, ladite attribution comprenant l'attribution conformément au message de requête d'envoi reçu, d'un ou plusieurs sous-canaux qui sont utilisés pour envoyer des données de liaison montante, et une durée d'utilisation de canal correspondante à la station respective qui envoie le message de requête d'envoi reçu ; dans lequel
le module d'envoi (11) est configuré en outre pour envoyer, à l'aide des ressources de canal attribuées, des messages d'acquittement d'envoi respectifs aux au moins deux stations qui envoient les messages de requête d'envoi reçus, de telle sorte que les stations qui reçoivent les message d'acquittement d'envoi utilisent leur ressource de canal respective comprenant une sous-porteuse attribuée pour envoyer des données de liaison montante, ledit envoi comprenant l'envoi, à l'aide des un ou plusieurs sous-canaux utilisés pour envoyer des données de liaison montante et attribués à la station respective qui envoie le message de requête d'envoi reçu, du message d'acquittement d'envoi à la station respective qui envoie le message de requête d'envoi reçu, le message d'acquittement d'envoi comprenant les un ou plusieurs sous-canaux qui sont utilisés pour envoyer des données de liaison montante et qui sont attribués à la station respective qui envoie le message de requête d'envoi reçu, et de la durée d'utilisation de canal correspondante ;
le module de réception (12) est configuré en outre pour recevoir les données de liaison montante envoyées simultanément par chacune des au moins deux stations sur ses un ou plusieurs sous-canaux attribués durant la durée d'utilisation de sous-canal correspondante ; et
le module d'envoi (11) est configuré en outre pour envoyer, en réponse à la réception des données de liaison montante envoyées simultanément par les au moins deux stations, des messages d'acquittement respectifs simultanément à des stations qui envoient avec succès des données de liaison montante.

6. Point d'accès selon la revendication 5, dans lequel l'envoi d'informations d'opportunités de canaux comprend :
l'envoi d'une trame balise, la trame balise comprenant les informations d'opportunités de canaux.

7. Point d'accès selon la revendication 5, dans lequel l'envoi d'informations d'opportunités de canaux comprend :
l'envoi d'un message d'indication de synchronisation de liaison montante, le message d'indication de synchronisation de liaison montante comprenant les informations d'opportunités de canaux.

8. Point d'accès selon la revendication 7, dans lequel le module d'envoi (11) est configuré en outre pour, avant l'envoi du message d'indication de synchronisation de liaison montante :
envoyer une trame balise, la trame balise comprenant un instant d'envoi auquel le point d'accès envoie le message d'indication de synchronisation de liaison montante dans une période de balise courante, de telle sorte qu'une station qui possède des données à envoyer reste en état d'éveil à l'instant auquel le message d'indication de synchronisation de liaison montante est envoyé, et reçoive le message d'indication de synchronisation de liaison montante.
